# EUROPÄISCHE PATENTSCHRIFT

(11) **EP 0 648 638 B1**
(45) Veröffentlichungstag und Bekanntmachung des Hinweises auf die Patenterteilung: **18.03.1998**
(21) Anmeldenummer: 94115176.3
(22) Anmeldetag: 27.09.1994
(51) Int. Cl.: B60K 6/02, B60K 5/04, B60K 17/04

(54) **Antriebskombination**
Driving combination
Chaîne de propulsion

(30) Priorität: 15.10.1993 DE 4335144
(43) Veröffentlichungstag der Anmeldung: 19.04.1995
(73) Patentinhaber: J.M. Voith GmbH, D-89522 Heidenheim (DE)
(72) Erfinder: Wüst, Bernhard, Dr., D-89522 Heidenheim (DE); Stodt, Enno, D-89522 Heidenheim (DE); Müller, Robert, Dr., D-89407 Dillingen (DE)
(74) Vertreter: Weitzel, Wolfgang, Dr.-Ing. Patentanwalt

(56) Entgegenhaltungen:
- EP-A- 0 270 521
- EP-A- 0 333 487
- AT-B- 245 947
- DE-A- 2 928 191
- DE-A- 3 624 979
- FR-A- 2 030 661
- FR-A- 2 689 821

## Beschreibung

Die Erfindung betrifft eine Antriebskombination für den Heckantrieb eines Transportfahrzeuges, insbesondere eines Lastkraftwagens oder eines Busses.

Für den Antrieb eines Transportfahrzeuges, insbesondere für den Heckantrieb in Verbindung mit einem Verbrennungsmotor sind diverse Kombinationsmöglichkeiten bekannt. Der der Erfindung am nächsten kommende Stand der Technik entspricht der bekannten Antriebskombination des Renault-Bus vom Typ R 312, bzw. dem Antriebskonzept, wie es beschrieben ist in Lastauto Omnibus 7/93, Seiten 22-24.

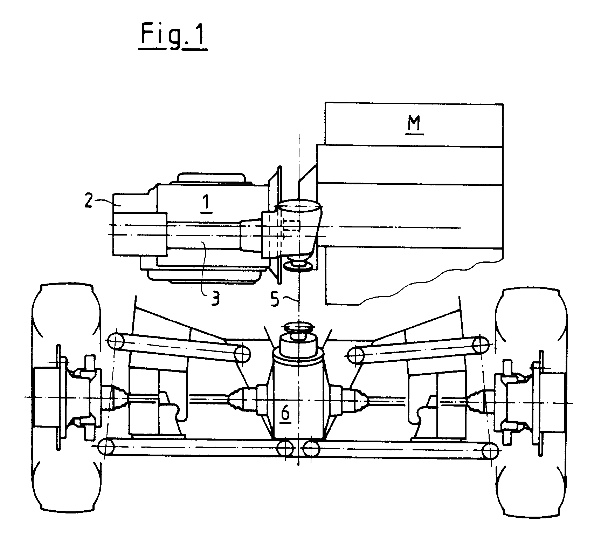

Der oben genannte Stand der Technik zeigt Lösungen für Antriebskonzepte entsprechend der Figur 1, wobei die Antriebsleistung eines querliegenden Motores über ein daran angeflanschtes Getriebe mit einer anschließenden sogenannten Dropbox, einer Gelenkwelle und einem 90°-Winkeltrieb über eine weitere Gelenkwelle zum Differential der Hinterachse weitergegeben wird. Derartige Konzepte bergen in sich den Nachteil, daß aufgrund der Winkelgetriebe ein relativ geringer Wirkungsgrad erreicht wird, während gleichzeitig die Kosten für ein solches Getriebe relativ hoch anzusetzen sind. Ein weiterer Nachteil liegt darin, daß die Geräuschentwicklung dieser Winkelgetriebe aufgrund ihrer Verzahnung relativ hoch liegt und damit wiederum aufwendige Geräuschdämmungsmaßnahmen nach sich zieht. Ein weiterer Nachteil dieses Standes der Technik besteht darin, daß es relativ aufwendig und schwierig ist, bei diesem Antriebssystem einen Hybridantrieb, bestehend aus einem Verbrennungsmotor und einem mit dem Antriebsstrang gekoppelten Elektromotor zu verwirklichen.

Es ist Aufgabe der Erfindung, eine Antriebskombination für einen Heckantrieb eines Transportfahrzeuges darzustellen, der zum einen nicht die Nachteile eines Winkelantriebs, nämlich niedriger Wirkungsgrad und hohe Geräuschentwicklung verbunden mit hohem Herstellungsaufwand, beinhaltet. Eine weitere Aufgabe der Erfindung ist es, die Möglichkeit eines problemlosen zusätzlichen Elektromotoranschlusses (Hybridantrieb) darzustellen.

Die Erfindung wird durch die Merkmalskombination des Anspruches 1 gelöst.

Die Erfindung ist anhand der Figuren näher beschrieben. Darin ist im übrigen folgendes dargestellt:
- Figur 1:: Stand der Technik.
- Figur 2:: Schnittzeichnung der erfindungsgemäßen Antriebskombination mit quer liegendem Motor und Getriebe.
- Figur 3:: Schnittzeichnung der erfindungsgemäßen Antriebskombination mit längs liegendem Motor und Getriebe.

Figur 1 zeigt den Stand der Technik für einen kompakten Heckantrieb eines Transportfahrzeuges. Die Figur zeigt einen querliegenden Motor M mit einem daran angeflanschten abtriebsseitigen Getriebe 1, an dessen Getriebeausgang eine sogenannte Dropbox 2 angeflanscht ist. An der Ausgangswelle der Dropbox 2 ist eine Gelenkwelle 3 angeordnet, die in einen 90°-Winkeltrieb 4 übergeht, dessen Abtriebsseite über eine Gelenkwelle 5 mit dem Differential 6 der Antriebsachse des Fahrzeuges in bekannter Weise verbunden ist.

Die Nachteile dieser Anordnung sind hinlänglich bekannt, so bestehen zum einen hohe Kosten für die Verzahnung der Winkelgetriebe 4, mit entsprechenden Nachteilen bezüglich der Geräuschentwicklung eines solchen Antriebssystems.

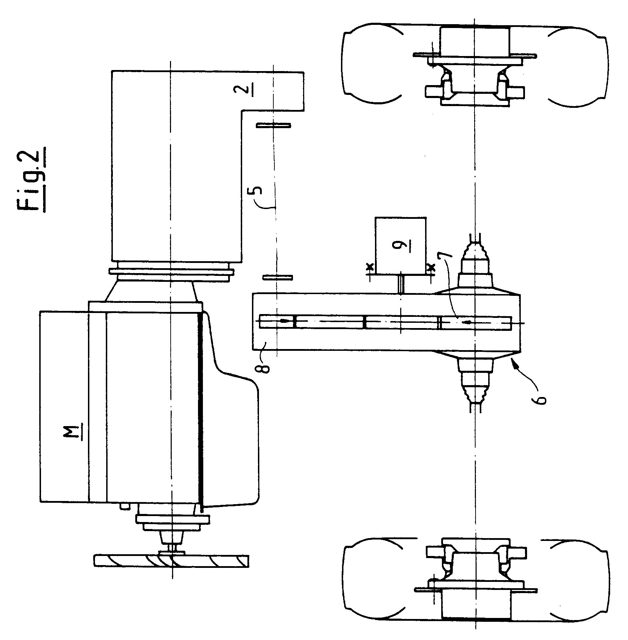

Figur 2 zeigt eine erfindungsgemäße Antriebskombination mit einem über der Achse querliegenden Verbrennungsmotor M, an dessen Abtriebswelle ein Getriebe 2 angeflanscht ist. Das Getriebe 2 ist derart gestaltet, daß seine Abtriebswelle wiederum parallel zur Fahrzeugachse herausgeführt wird. Über eine Achse 5 oder eine Gelenkwelle 5 wird eine Verbindung zu einem Stirnradgetriebe 8 hergestellt, welches aus einer Stirnradkette besteht, wobei in diesem Beispiel das letzte Stirnrad 7 mit dem Gehäuse des Ausgleichsdifferentials 6 kombiniert ist. Die Zahl der Stirnräder kann hierbei entsprechend der geforderten Drehrichtung gewählt werden. Alternativ besteht die Möglichkeit, an die Achse eines der Stirnräder direkt einen Elektromotor 9 anzuflanschen, so daß auf diese Weise eine problemlose und platzsparende Verwirklichung eines Hybridantriebs möglich ist. In dem Falle des Hybridantriebes wird zusätzlich für eine Entkopplung des vorangehenden Antriebsstranges, z.B. mit Hilfe einer zwischengeschalteten Reibkupplung, gesorgt. Motor und Getriebe sind senkrecht über der Antriebsachse des Fahrzeuges angeordnet.

Bei dieser gezeigten Kombination ist es besonders vorteilhaft, daß mindestens eine Gelenkwelle und die Kegelradstufen entfallen, wodurch eine erhebliche Reduktion der Kosten und der Geräuschentwicklung im Betrieb einhergeht.

Eine mögliche vorteilhafte Ausgestaltung des oben gezeigten Beispeles besteht darin, daß Stirnräder mit nicht-parallelen Achsen gearbeitet wird, so daß die Gelenkwelle einen größeren Achsabstand zwischen der Ausgangswelle des Getriebes und der Eingangswelle des Stirnradgetriebes überbrückt werden kann und somit auf wenigstens ein Stirnrad des Stirnradgetriebes verzichtet werden kann. Dazu schließt indestens die Achse des ersten Stirnrades des Stirnradgetriebes einen spitzen Winkel mit der Achse des darauffolgenden Stirnrades ein und beide Stirnräder weisen eine Evolventenverzahnung auf. Die Abtriebsachse des Getriebesbildet mit der Hauptachse des Getriebes einen spitzen Winkel.

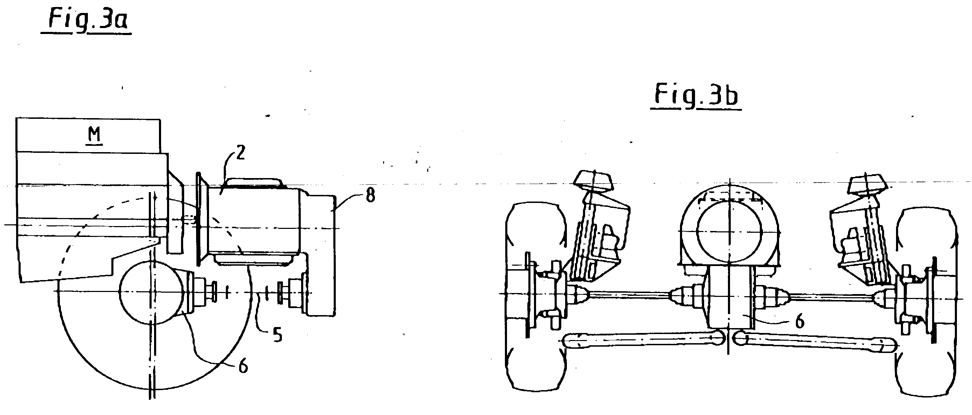

Die Figuren 3a (Längsschnitt) und 3b (Querschnitt) zeigen eine erfindungsgemäße Antriebskombination mit einem längs liegenden Verbrennungsmotor M, an dessen Abtriebswelle ein Getriebe 2 angeflanscht ist. Das Getriebe 2 ist derart gestaltet, daß seine Abtriebswelle wiederum längs zur Fahrzeugachse herausgeführt wird. Hieran schließt sich direkt ein Stirnradgetriebe 8 an, welches aus einer Stirnradkette besteht, wobei in diesem Beispiel das letzte Stirnrad wiederum über eine Achse 5 die Verbindung zum Ausgleichsdifferential 6 herstellt. Die Zahl der Stirnräder der Stirnradkette kann entsprechend der geforderten Drehrichtung gewählt werden. Alternativ besteht die Möglichkeit, an die Achse eines der Stirnräder direkt einen Elektromotor anzuflanschen, so daß auf diese Weise eine problemlose und platzsparende Verwirklichung eines Hybridantriebs möglich ist. In dem Falle des Hybridantriebes wird zusätzlich für eine Entkopplung des vorangehenden Antriebsstranges, z.B. mit Hilfe einer zwischengeschalteten Reibkupplung, gesorgt.

## Patentansprüche

1. Antriebskombination für den Heckantrieb eines Transportfahrzeuges, insbesondere eines Großraumtransportfahrzeuges, mit den folgenden Merkmalen:
1.1 einem Verbrennungsmotor (M), dessen Kurbelwelle horizontal und quer oder längs zur Fahrtrichtung angeordnet ist;
1.2 ein vom Verbrennungsmotor (M) angetriebenes Getriebe (2)-Schaltgetriebe oder Automatikgetriebe -, dessen Abtriebswelle quer zur Fahrtrichtung angeordnet ist;
1.3 ein Stirnradgetriebe (8) mit mindestens zwei Stirnrädern - einer Stirnradkette -, wobei
1.3.1 ein erstes Stirnrad mit der Abtriebswelle des Getriebes (2) kraftschlüssig verbunden ist; und
1.3.2 ein letztes Stirnrad (7) des Stirnradgetriebes (8) kraftschlüssig über ein Differentialgetriebe (6) mit einer Fahrzeugantriebsachse verbunden ist.
1.4 mindestens ein Elektromotor (9) ist mit mindestens einem Stirnrad des Stirnradgetriebes (8) kraftschlüssig verbunden.
1.5 Motor (M) und Getriebe (2) sind senkrecht über der Antriebsachse des Fahrzeuges angeordnet.

2. Antriebskombination gemäß Anspruch 1, dadurch gekennzeichnet, daß zur kraftschlüssigen Verbindung von Getriebe (2) und Stirnradgetriebe (8) eine Gelenkwelle (5) vorgesehen ist.

3. Antriebskombination gemäß einem der Ansprüche 1-2, dadurch gekennzeichnet, daß mindestens die Achse des ersten Stirnrades des Stirnradgetriebes einen spitzen Winkel mit der Achse des darauffolgenden Stirnrades einschließt und beide Stirnräder eine Evolventenverzahnung aufweisen.

4. Antriebskombination gemäß Anspruch 3, dadurch gekennzeichnet, daß die Abtriebsachse des Getriebes mit der Hauptachse des Getriebes einen spitzen Winkel bildet.

## Claims

1. A drive combination for the rear drive of a transporting vehicle, particularly a large capacity transporting vehicle, with the following features:
1.1 an internal combustion engine (M), of which the crankshaft is disposed horizontally and transversely or longitudinally in relation to the direction of travel;
1.2 driven by the internal combustion engine (M) a gear mechanism (2) - gear shift mechanism or automatic gearbox -, the output shaft of which is disposed crosswise to the direction of travel;
1.3 a spur gear mechanism (8) with at least two spur gears - of a spur gear chain -, whereby
1.3.1 a first spur gear is positively connected to the output shaft of the gearbox (2), and
1.3.2 a last spur gear (7) of the spur gear transmission (8) is operatively connected to a vehicle driving axle via a differential gear mechanism (6);
1.4 at least one electric motor (9) is positively connected to at least one spur gear of the spur gear mechanism (8);
1.5 motor (M) and gear mechanism (2) are disposed vertically above the driving axle of the vehicle.

2. A drive combination according to claim 1, characterised in an articulated shaft (5) is provided for the operative connection of gear mechanism (2) and spur gear mechanism (8).

3. A drive combination according to one of claims 1 to 2, characterised in that at least the arbor of the first spur gear of the spur gear mechanism encloses an acute angle with the arbor of the subsequent spur gear, both spur gears having involute gear teeth.

4. A drive combination according to claim 3, characterised in that the output shaft of the gear mechanism forms an acute angle with the main shaft of the gear mechanism.

## Revendications

1. Chaîne de propulsion pour la transmission arrière d'un véhicule de transport, en particulier d'un véhicule de transport de grande capacité, avec les caractéristiques suivantes :
1.1 un moteur à combustion interne (M), dont l'arbre de vilebrequin est disposé horizontalement, transversalement ou en long par rapport au sens de la marche,
1.2 une boîte de vitesse (2) entraînée par le moteur à combustion interne (M) -boîte mécanique ou boîte automatique-, dont l'arbre de sortie est perpendiculaire au sens de la marche,
1.3 une boîte de transmission à pignons droits, (8) avec au moins deux pignons droits -une chaîne de pignons droits-,
1.3.1 un premier pignon droit, qui est relié à l'arbre de sortie de la boîte de vitesse (2) par entraînement mécanique, et
1.3.2 un dernier pignon droit (7) de la boîte de transmission à pignons droits (8), qui est relié au moyen d'un différentiel (6) à l'essieu moteur du véhicule, par entraînement mécanique,
1.4 au moins un moteur électrique (9), qui est relié à au moins un pignon droit de la boîte de transmission (8) à pignons droits par entraînement mécanique,
1.5 le moteur (M) et la boîte de vitesse (2) étant disposés perpendiculairement sur l'essieu moteur du véhicule.

2. Chaîne de propulsion selon la revendication 1,
caractérisé en ce que
l'on prévoit, pour réaliser une liaison par entraînement mécanique de la boîte de vitesse (2) et de la boîte de transmission à pignons droits (8), il est prévu un arbre de transmission (5).

3. Chaîne de propulsion selon l'une des revendications 1 et 2,
caractérisé en ce que
- au moins l'axe du premier pignon droit de la boîte de transmission à pignons droits forme un angle aigu avec l'axe du pignon droit qui lui fait suite et
- les deux pignons droits forment un engrenage à développante.

4. Chaîne de propulsion selon la revendication 3,
caractérisé en ce que
l'axe de sortie de la boîte de vitesse forme avec l'axe principal de la boîte de vitesse un angle aigu.
